(19) Europäisches Patentamt
European Patent Office
Office européen des brevets

(11) **EP 3 360 918 B1**

(12) **EUROPEAN PATENT SPECIFICATION**

(45) Date of publication and mention
of the grant of the patent:
**04.11.2020  Bulletin 2020/45**

(51) Int Cl.:
***C08J 3/22*** *(2006.01)*     ***C08J 5/00*** *(2006.01)*
***C08K 9/02*** *(2006.01)*     ***C08K 9/04*** *(2006.01)*

(21) Application number: **17155580.8**

(22) Date of filing: **10.02.2017**

(54) **POLYMER NANOCOMPOSITE MASTERBATCH, POLYMER NANOCOMPOSITE AND METHODS FOR PREPARATION THEREOF**

POLYMERNANOVERBUNDSTOFF-MASTERBATCH, POLYMERNANOVERBUNDSTOFF UND VERFAHREN ZUR HERSTELLUNG DAVON

MÉLANGE MAÎTRE NANOCOMPOSITE POLYMÈRE, NANOCOMPOSITE POLYMÈRE ET LEURS PROCÉDÉS DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.08.2018  Bulletin 2018/33**

(73) Proprietor: **Thai Polyethylene Co., Ltd.**
**10800 Bangkok (TH)**

(72) Inventors:
• **Phonthammachal, Nopphawan**
  **Pichit 66120 (TH)**
• **Treethammakul, Supakitt**
  **Prakam 10270 (TH)**
• **Sukachonmakul, Tanapon**
  **Bangkok 10150 (TH)**

(74) Representative: **Scholz, Volker**
**Boehmert & Boehmert**
**Anwaltspartnerschaft mbB**
**Pettenkoferstrasse 22**
**80336 München (DE)**

(56) References cited:
**WO-A1-2006/075971     WO-A2-2008/112362**
**US-A1- 2007 015 853     US-A1- 2009 176 911**
**US-A1- 2011 086 956**

Remarks:
The file contains technical information submitted after the application was filed and not included in this specification

**Description**

The present invention relates to a method for preparation of a polymer nanocomposite masterbatch, to a polymer nanocomposite masterbatch, and to a polymer nanocomposite.

Polymer nanocomposite materials have been widely developed in many industrial applications to enhance the mechanical properties and special properties of materials, such as flame retardancy, thermal stability, and barrier properties. To achieve the target properties of nanocomposite materials, dispersions of nano filler materials in a polymer matrix is the key factor. Theoretically, a nano filler material must be separated to individual particles or platelets to provide high performance of material because agglomerated particles result in a defect of the system. Compatibility between the filler material and the polymer is an important parameter to improve the dispersion of the filler in the polymer matrix. Normally, there are two main approaches for dispersion improvement of the filler in the polymer matrix, namely (1) physical modification by using mechanical forces to break the agglomerated particles, such as sonication and homogenization and (2) chemical modification by using a chemical reaction between functional groups on the surface of the filler and a modifying agent, such as organo silane agents or acid derivative agents. However, a full dispersion of a nano filler material in a polymer matrix cannot be obtained by only using one technique. Rather, suitable methods must be designed to synergize the modifying techniques effectively.

There have been numerous attempts to prepare a polymer nanocomposite. US 2006/0267255A1 discloses a process for producing a nanoclay masterbatch by using twin screw extruder. US7514491B2 relates to a method of making polymer/clay nanocomposites by contacting aqueous slurry of inorganic clay with a polymer solution to form emulsions or micro-emulsions. US6462122B1 discloses a nanocomposite concentrate composition by melt compounding method. US8124678B2 discloses a method of making a polymer nanocomposite masterbatch by solution mixing technique.

WO2008/112362A2 discloses a nanocomposite method of manufacture.

US2011/086956A1 discloses a nanocomposite masterbatch composition and a method for manufacturing the same.

US2009/176911A1 discloses a masterbatch thermoplastic delivery system.

WO2006/075971A1 discloses thermoplastic polymer based nanocomposites.

It is an object of the present invention to provide a method for preparation of a polymer nanocomposite masterbatch and/or a polymer nanocomposite overcoming drawbacks of the prior art, in particular having high aspect ratio and/or high dispersion of filler, high strength and high impact properties.

The above object is achieved in accordance with the subject-matter of the independent claims. Preferred embodiments result from the subclaims.

This object is achieved by a method for preparing a polymer nanocomposite masterbatch, comprising the steps: a) dispersing a nano filler material having a geometric size of primary particle from 0.01 to 100 nm with respect to at least one dimension thereof in an organic solvent; b) contacting the nano filler material in the organic solvent with a surface functionalizing agent to form a surface functionalized nano filler material suspension, wherein the surface functionalizing agent is selected from the group consisting of quaternary ammonium salts, silanes, titanates, organic acid, grafted oligomer or grafted polymer; c) mixing the surface functionalized nano filler material suspension with a polymer solution to form a dissolved polymer nanocomposite masterbatch suspension; d) precipitating the dissolved polymer nanocomposite masterbatch suspension to produce a precipitation of polymer nanocomposite masterbatch; e) optionally, filtering and drying the precipitation of polymer nanocomposite masterbatch to form a polymer nanocomposite masterbatch.

A nano filler material according to the present disclosure is a filler material having the geometric size of primary particle (i.e. in case of more than one particle forming an agglomerate the size of a single particle) from 0.01 nm to 100 nm, even more preferred 0.1 nm to 100 nm, further preferred 1 nm to 100 nm, preferably 10 nm to 100 nm, with respect to at least in one dimension thereof.

The inventive method is employed to produce a highly dispersed nano filler material in a polymer matrix (= polymer nanocomposite masterbatch) by using a solution mixing process. The masterbatch can be produced in various high concentration forms such as solid form, liquid form, and slurry form that may be further processed with additional polymer materials to produce polymer nanocomposite with desired final nano filler loading. The inventive polymer nanocomposite masterbatch, respectively the polymer nanocomposite, have high aspect ratio and/or high dispersion of filler, high strength and high impact properties. Polymer nanocomposite masterbatch is polymer having dispersed therein a high amount of nano filler material.

Polymer nanocomposite is polymer having dispersed therein an amount of nano filler material.

In one embodiment, the nano filler material is selected from the group consisting of minerals, inorganic fillers, organic fillers, metal oxides, natural fibers, synthetic fibers or a mixture thereof.

In a preferred embodiment, the nano filler material is selected from montmorillonite, smectite, kaolin, boulangerite, imogolite, layered silicate compound, organo clay modified with quaternary ammonium salt, silica, carbon black, cellulose fiber, nano cellulose fiber, talc, calcium carbonate, alumina or a mixture thereof.

In one embodiment, the organic solvent is selected from xylene, toluene, hexane or dichlorobenzene.

In one embodiment, the dispersing step provides well dispersed nano filler material in the organic solvent.

In a preferred embodiment, the dispersing step comprising stirring the nano filler material in the organic solvent for 3 hours - 24 hours and/or sonicating for 20 - 60 minutes and/or homogenizing for 15 - 30 minutes and/or stirring for 12 - 24 hours. Preferably, the dispersing step is operated at ambient temperature or 20 - 30 °C.

In a further embodiment, the contacting step comprises homogenizing the nano filler material suspension for 15 - 30 minutes and/or adding the surface functionalizing agent and/or stirring for 2 - 6 hours at 80 - 100 °C and/or homogenizing, preferably at ambient temperature or 20 - 30 °C, for 15 - 30 minutes, and/or stirring, preferably at ambient temperature or 20 - 30 °C, for 12 - 24 hours.

The nano filler material is well dispersed in solvent before contacting for surface functionalization for achieving a well surface functionalized nano filler material which enhance the compatibility between nano filler material and polymer when respectively mixing with a polymer solution to get a polymer nanocomposite masterbatch having high aspect ratio and/or high dispersion of filler.

In preferred embodiment, the surface functionalizing agent is in an amount in the range from 0.1 to 20 % by weight with respect to weight of the nano filler material, preferably 1 to 10 % by weight with respect to weight of the nano filler material.

The surface functionalizing agent can be a modifying agent or a coupling agent. The mechanism of the surface functionalization may occur by (1) physical bonding between organic cation and layer of nano filler material via exchanging the metal cation located between the layers of layered silicate material or (2) chemical bonding, such as in case of silanes or organo silanes.

In one embodiment, the polymer solution is the solution of polymer selected from polyolefins, preferably polyethylene, polypropylene, C4-C8 alpha-polyolefins base, copolymer thereof; polyolefin rubber; polyolefin oligomer; polyolefin wax; polyaramide; polyarylamide; polycarbonate; styrene acrylonitrile; acrylonitrile butadiene styrene; polyacetal; polysulfone; polyester, preferably polybutylene terephthalate, polyethylene terephthalate; thermoplastic polyurethane elastomer; polyphenylene sulfide; polyether sulfone; polyphenylene oxide; vinyl polymers, preferably polystyrene; polyvinyl chloride; polyacrylate; polyurethanes; polyetherimide; polyetheretherketone; polyetherketone; polymethylpentene; perfluoroalkoxy; ethylene tetrafluroethylene; polyvinylidene fluoride; fluorinated ethylene propylene; liquid crystal polymers; polyphthalamide; polyether, polysiloxane, thermoplastic polyimide; and polyamide.

In preferred embodiment, the polymer is a thermoplastic polymer selected from homopolymer polyethylene e.g., linear low density polyethylene (LLDPE), low density polyethylene (LDPE), homopolymer polypropylene, copolymer of polyethylene/ polypropylene, copolymer of polyethylene or polypropylene and C4-C8 alpha-polyolefins base.

The polymer is used as a carrier of the inventive masterbatch.

In another embodiment, the mixing step comprises mixing the surface functionalized nano filler material suspension into the polymer solution and stirring for 2 - 6 hours. Preferably, the surface functionalized nano filler material suspension is a hot surface functionalized nano filler material suspension (80 - 120°C) which is added into a hot polymer solution (80 - 120 °C) and then stirred at 80 -120 °C for 2 - 6 hours.

In one embodiment, the polymer solution is prepared by (obtainable by) dissolving a polymer in a suitable organic solvent at suitable temperature, e.g. dissolving polypropylene in xylene at a weight to volume ratio of polypropylene to xylene = 1 : 10 at 120°C until the clear polypropylene solution obtained.

In one embodiment, the polymer nanocomposite masterbatch can be prepared by solution mixing process. Firstly, the nano filler material is dispersed in organic solvent (e.g. xylene) via use of sonication and homogenization to break the agglomerated particles. Importantly, surface functionalization of nano filler material is operated to improve the compatibility between nano filler material and polymer system. After that, the suspension of surface functionalized nano filler material was added into the polymer solution (polymer dissolved in organic solvent). Finally, the polymer nanocomposite masterbatch can be produced in solid, liquid, and slurry form.

In a further embodiment, the precipitating step comprises adding a precipitant to the polymer nanocomposite masterbatch solution to form a polymer nanocomposite masterbatch precipitate then washing the precipitate by the solvent or precipitant, e.g. adding ethanol to clay/PP masterbatch solution to form clay/PP masterbatch precipitate and washing the precipitate with ethanol until no or less xylene (which is the solvent of the masterbatch solution) detected.

In a further embodiment, the wet polymer nanocomposite masterbatch is dried and grinded to form a polymer nanocomposite masterbatch powder.

In further embodiment, the method further comprises the step of compounding the polymer nanocomposite masterbatch with a (neat) polymer to form a polymer nanocomposite.

In one embodiment, the polymer nanocomposite is produced by dilution of the polymer nanocomposite masterbatch with a polymer via melt blending process of extruder machine to obtain the nanocomposite material having desired final nano filler loading.

The object is further achieved by a method for preparing a polymer nanocomposite comprising a step of compounding the inventive polymer nanocomposite masterbatch with a polymer.

Finally, the object is achieved by a polymer nanocomposite obtainable by the inventive method, wherein the nanofiller material is organo clay modified with quaternary ammonium salt.

In one embodiment, the polymer is selected from polymer selected from polyolefins, preferably polyethylene, polypropylene, C4-C8 alpha-polyolefins base, copolymer thereof; polyolefin rubber; polyolefin oligomer; polyolefin wax; polyaramide; polyarylamide; polycarbonate; styrene acrylonitrile; acrylonitrile butadiene styrene; polyacetal; polysulfone; polyester, preferably polybutylene terephthalate, polyethylene terephthalate; thermoplastic polyurethane elastomer; polyphenylene sulfide; polyether sulfone; polyphenylene oxide; vinyl polymers, preferably polystyrene; polyvinyl chloride; polyacrylate; polyurethanes; polyetherimide; polyetheretherketone; polyetherketone; polymethylpentene; perfluoroalkoxy; ethylene tetrafluroethylene; polyvinylidene fluoride; fluorinated ethylene propylene; liquid crystal polymers; polyphthalamide; polyether, polysiloxane, thermoplastic polyimide; and polyamide.

In preferred embodiment, the polymer is a thermoplastic polymer selected from homopolymer polyethylene e.g., linear low density polyethylene (LLDPE), low density polyethylene (LDPE), homopolymer polypropylene, copolymer of polyethylene/ polypropylene, copolymer of polyethylene or polypropylene and C4-C8 alpha-polyolefins base.

In a preferred embodiment, the polymer nanocomposite masterbatch comprises nano filler material in an amount in a range from 10% to 80% by weight, more preferably 20% to 60% by weight and most preferably 30% to 40% by weight, with respect to the total weight of the polymer nanocomposite masterbatch. It was surprisingly found that the inventive method for preparation of a polymer nanocomposite masterbatch provides a polymer nanocomposite masterbatch and/or a polymer nanocomposite having high aspect ratio and/or high dispersion of filler, high strength and high impact properties. The effects are even more pronounced when using the different embodiments explicitly mentioned above. The best results were achieved when combining two or more of the explicitly mentioned embodiments.

Abbreviation

| Normal-clay/PP composite | :Polypropylene composite comprises normal-clay |
| Clay-MB/PP nanocomposite | :Polypropylene nanocomposite comprises nanoclay masterbatch |
| TEM | : Transmission electron microscopy technique |
| SEM | : Scanning electron microscopy technique |
| MFI | : Melt flow index |
| HDT | : Heat distortion temperature |

Methods and definitions

1. Determination of mechanical properties

a) Tensile strength, %Elongation are measured by ASTM D638-14. The specimen in dumbbell shape is extended at the cross head speed of 200 mm/min by using an Instron 5565 Universal Testing machine (Instron, Canton, MA, USA). Tensile strength, Elongation are calculated by the following formula.

$$\text{Tensile strength } (\frac{\text{kgf}}{\text{mm}^2}) = \frac{\text{Load value (kgf)}}{\text{Width (mm)x Thickness (mm)}}$$

$$\% \text{ Elongation} = \frac{\text{Extension}}{\text{Primary length}} \times 100$$

b) Flexural modulus and Flexural strength are measured by ASTM D790-15. The specimen in bar shape is measure in three-points bending by using an Instron 5565 Universal Testing machine. The specimen size is 127 mm X 12.7 mm X 3.2 mm. The test speed is 12.8 mm/min, and the support is 48 mm. Flexural modulus and Flexural strength are calculated by the following formula.

$$Flexural\ modulus = \frac{L^3 m}{4bd^3}$$

$$Flexural\ strength = \frac{3PL}{2bd^2}$$

where:

L = Support span, mm (in.),
m = Slope of the tangent to the initial straight-line portion of the load-deflection curve, N/mm (lbf/in.) of deflection,
b = Width of beam tested, mm (in.),
d = Depth of beam tested, mm (in.), and
P = Load at a given point on the load-deflection curve, N (lbf).

c) Impact strength of notched specimens is measured by ASTM D 256-10 using Universal impact tester No.258-L (Yasuda Seiki Seisakusho Ltd). The sample has 45° V-shaped cut with a depth of 2.54 mm, and is sized as 63.5 mm X 12.7 mm X 3.2 mm. There were a total of 5 samples for each sample.

2. Determination of melt flow index

The melt flow index (MFI) of sample is measured by following ASTM D 1238-13 via Dynisco Melt Flow Indexer Model No. D4004HV.

3. Determination of Heat distortion temperature

Heat distortion temperature (HDT) of sample is measured using Tinius olsen, 303/HDTM model at 120 °C/h with load cell of 0.45 MPa by following ASTM D 648-16. The specimen size is 12.7 mm X 127 mm X 3 mm.

In the following, the invention will be described in greater detail with reference to specific examples without, however, intending to limit the scope of the application respectively. Reference will be made in this regard to the enclosed figures, wherein

Figure 1 is a TEM image of octyl silane modified clay in xylene.

Figure 2 are TEM images of octyl silane modified clay in polypropylene solution.

Figure 3 is a TEM image of normal-clay/ PP composite.

Figure 4 is a TEM image of clay-MB/PP nanocomposite.

Figure 5 are SEM images of clay-MB/PP nanocompositeprepared from different drying techniques.

Figure 6 are TEM images of clay-MB/PP nanocomposite prepared from different drying techniques.

**Example**

**Example 1** Preparation of triethoxy (octyl) silane modified nanoclay masterbatch (Clay-MB) by solution mixing process

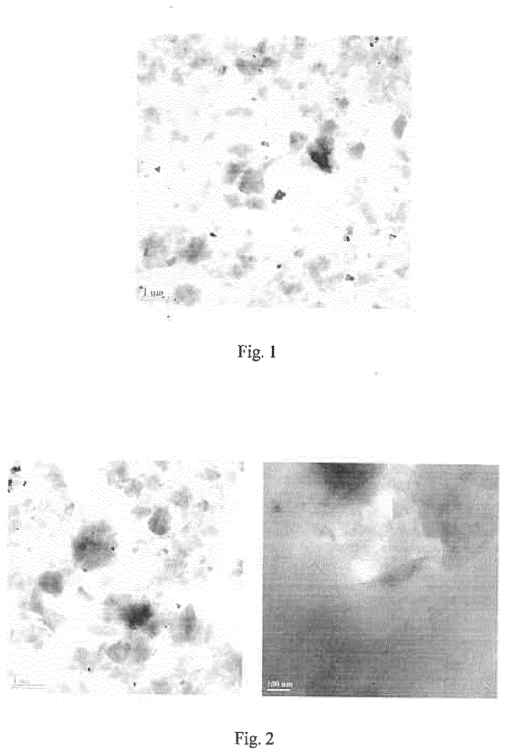

Clay (Closite 20 from Southern clay products) (2 g) was stirred in xylene (40 ml) by magnetic stirrer for 3 hours to intercalate the layers of clay. After that the intercalated clay/xylene suspension was sonicated for 30 minutes, highly dispersed by homogenizing process using 8,000 rpm of impeller speed for 15 minutes, and then stirred overnight at room temperature, respectively. Triethoxy (octyl) silane was selected to modify the surface of clay by homogenizing the clay/xylene suspension for 15 minutes, adding 0.2 ml triethoxy (octyl) silane into the clay/xylene suspension, heating at 80 °C for 4 hours, homogenizing 15 minutes and then stirred it overnight at room temperature. Dispersion of triethoxy (octyl) silane modified clay in xylene was observed by TEM technique showing single platelet alignment of clay layers and stacking of clay in some area as displayed in Figure 1.

Nanoclay masterbatch was prepared by adding hot triethoxy (octyl) silane modified clay (80°C) in hot polypropylene solution then stirring for 2 hours at 120°C. The hot polypropylene solution was prepared by dissolving polypropylene 4.0 g in xylene 40 ml at 120°C until the polypropylene completely dissolves in xylene. Dispersion of triethoxy (octyl) silane modified nanoclay in polymer solution was observed by TEM technique showing single platelet alignment of clay layers and stacking of clay in some area as displayed in **Figure 2.**

After that the suspension of Clay-MB was precipitated with ethanol and washed with ethanol for three times to remove the residual xylene. The Clay-MB precipitate was dried by oven air and grinded by pulverizer machine to produce Clay-MB powder.

**Example 2** demonstrates the preparation and properties of Clay-MB/PP nanocomposite and Normal-clay/PP composite

The composition shown in **Table 1** was compounded on a 40 mm Leistriz co-rotating twin screw extruder. The extrusion conditions were: barrel temperature at 190 °C, screw speed 250 rpm with output 5 kg per hour. The properties were evaluated as presented in **Table 2.**

**Table 1**

| Formulation | Clay-MB/PP nanocomposite (inventive) (%) | Normal-clay/PP composite (comparative) (%) |
|---|---|---|
| PP base | 80.10 | 90.10 |
| Compatibilizer[1] | 4.75 | 4.75 |
| Clay-MB powder | 15 | 0 |
| Clay | 0 | 5 |
| Hindered phenolic antioxidant | 0.05 | 0.05 |
| Diphosphonite antioxidant | 0.1 | 0.1 |
| [1] Compatibilizer is an oligomer or polymer functionalized with polar groups such as amines or carboxylic acids and derivatives. | | |

**Table 2** Properties of Clay-MB/PP nanocomposite and Normal-clay/PP composite

| Mechanical properties | PP | Normal-clay/PP composite | Clay-MB/PP nanocomposite |
|---|---|---|---|
| Tensile at yield (kg/cm$^2$) | 292 | 295 | 310 |
| Tensile at break (kg/cm$^2$) | 200 | 204 | 119 |
| Elongation at yield (%) | 6 | 6 | 5 |
| Elongation at break (%) | 69 | 32 | 80 |
| IZOD Impact at 23 °C (kg*cm/cm) | 11 | 6 | 7 |
| IZOD Impact at 0 °C (kg*cm/cm) | - | 4 | 4 |
| Flexural modulus (kg/cm$^2$) | 12562 | 14098 | 15587 |
| Flexural strength (kg/cm$^2$) | 394 | 440 | 467 |
| MFI (230 °C, 2.16 kg) | 10 | 9 | 9 |
| HDT (°C) | - | 114 | 110 |

**As Table 2,** Clay-MB/PP nanocomposite has higher tensile at yield, elongation at break, flexural modulus, flexural strength than normal-clay/PP composite.

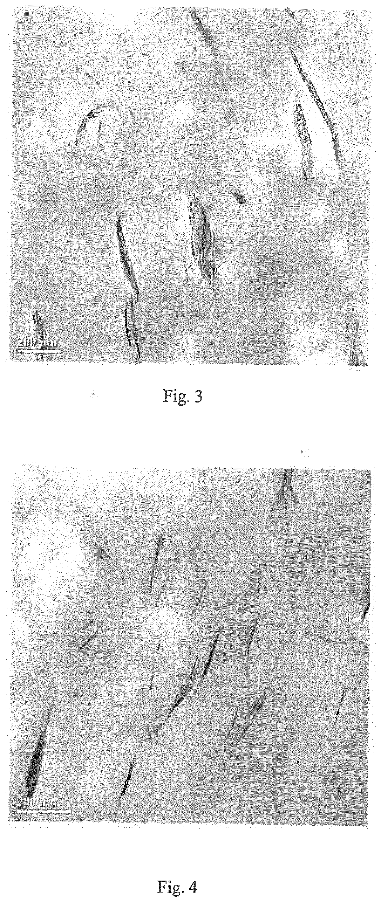

In order to explain the mechanical properties of composite material, dispersion of clay in both systems was investigated by TEM technique. **Figure 3** and **Figure 4** showed dispersion of clay in polymer matrix using normal clay and clay masterbatch, respectively. The results showed that high agglomerated particle having more number of clay layers was observed in direct dose system (normal-clay/PP composite) while less amount of stacking of clay layers was observed in the inventive masterbatch system (Clay-MB/PP nanocomposite).

**Example 3** demonstrates the effect of drying method of Clay-MB on dispersion of clay in polymer matrix.

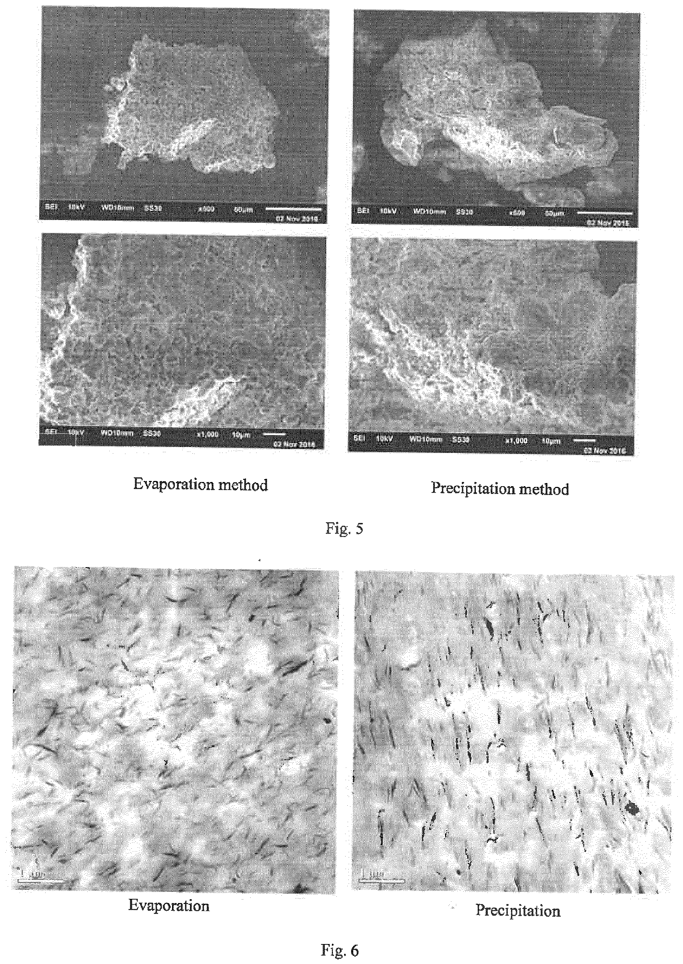

The Clay-MB/PP masterbatch suspension was drying by two different drying methods; solvent evaporation and precipitation. The solvent evaporation method was prepared by evaporating the Clay-MB/PP masterbatch suspension at the room temperature, then drying and grinding to obtain the Clay-MB/PP nanocomposite (Evaporation). The precipitation method was described in Example 1 to obtain the Clay-MB/PP nanocomposite (Precipitate). The results showed that drying method showed different dispersion behavior of nanoclay in polymer matrix as observed by SEM and TEM technique. As **Figure 5,** SEM images showed that good combination of clay and polymer matrix was observed in both techniques but the morphology of clay masterbatch is different between techniques. In case of evaporation method, the morphology of clay masterbatch showed rough surface of masterbatch particle while adhesion between small particles was observed in precipitation system.

In addition, the TEM images showed that precipitation method give higher aspect ratio of clay in polymer matrix than solvent evaporation method as compared in **Figure 6.** According to this behavior, mechanical properties of Clay-MB/PP nanocomposite prepared by precipitation method can be improved flexural modulus in 37.42 % and 6.01% as compared to PP base and evaporated ones, respectively, in **Table 3.** By this invention, high aspect ratio of clay polymer composite can be prepared providing highly mechanical properties of composite.

**Table 3** Properties of Clay-MB/PP nanocomposite prepared by evaporation and precipitation technique.

| Properties | PP | Clay-MB/PP nanocomposite (Evaporation) | Clay-MB/PP nanocomposite (Precipitate) |
|---|---|---|---|
| Tensile at yield (kg/cm$^2$) | 292 | 292 | 295 |
| Tensile at break (kg/cm$^2$) | 200 | 159 | 170 |
| Elongation at yield (%) | 6 | 6 | 6 |
| Elongation at break (%) | 69 | 60 | 74 |
| IZOD Impact at 23 °C (kg$^*$cm/cm) | 11 | 6.9 | 9 |
| IZOD Impact at 0 °C (kg$^*$cm/cm | - | 3.6 | 4.4 |
| Flexural modulus (kg/cm$^2$) | 12562 | 16285 | 17263 |
| Flexural strength (kg/cm$^2$) | 394 | 446 | 469 |
| MFI (230 °C, 2.16 kg) | 10 | 12 | - |

## Claims

1. A method for preparing a polymer nanocomposite masterbatch, comprising the steps:

   a) dispersing a nano filler material having a geometric size of primary particle from 0.01 to 100 nm with respect to at least one dimension thereof in an organic solvent;
   b) contacting the nano filler material in the organic solvent with a surface functionalizing agent to form a surface functionalized nano filler material suspension, wherein the surface functionalizing agent is selected from the group consisting of quaternary ammonium salts, silanes, titanates, organic acid, grafted oligomer or grafted polymer;
   c) mixing the surface functionalized nano filler material suspension with a polymer solution to form a dissolved polymer nanocomposite masterbatch suspension;
   d) precipitating the dissolved polymer nanocomposite masterbatch suspension to produce a precipitation of polymer nanocomposite masterbatch;
   e) optionally, filtering and drying the precipitation of polymer nanocomposite masterbatch to form a polymer nanocomposite masterbatch.

2. The method according to claim 1, wherein the nano filler material is selected from the group consisting of minerals, inorganic fillers, organic fillers, metal oxides, natural fibers, synthetic fibers or a mixture thereof.

3. The method according to claim 1 or 2, wherein the nano filler material is selected from montmorillonite, smectite, kaolin, boulangerite, imogolite, layered silicate compound, organo clay modified with quaternary ammonium salt, silica, carbon black, cellulose fiber, nano cellulose fiber, talc, calcium carbonate, alumina or a mixture thereof.

4. The method according to any of the preceding claims, wherein the organic solvent is selected from xylene, toluene, hexane or dichlorobenzene.

5. The method according to any of the preceding claims, wherein the dispersing step comprising stirring the nano filler material in the organic solvent for 3 hours - 24 hours and/or sonicating for 20 - 60 minutes and/or homogenizing for 15 - 30 minutes and/or stirring for 12 - 24 hours.

6. The method according to any of the preceding claims, wherein the contacting step comprises homogenizing the nano filler material suspension for 15 - 30 minutes and/or adding the surface functionalizing agent and/or stirring for 2 - 6 hours at 80 - 100 °C and/or homogenizing the resultant mixture for 15 - 30 minutes and/or stirring for 12 - 24 hours.

7. The method according to any of the preceding claims, wherein the surface functionalizing agent is in an amount in the range from 0.1 to 20 % by weight with respect to weight of the nano filler material.

8. The method according to any of the preceding claims, wherein the polymer solution is a solution of a polymer selected from polyolefins, preferably polyethylene, polypropylene, C4-C8 alpha-polyolefins base, copolymer thereof; polyolefin rubber; polyolefin oligomer; polyolefin wax; polyaramide; polyarylamide; polycarbonate; styrene acrylonitrile; acrylonitrile butadiene styrene; polyacetal; polysulfone; polyester, preferably polybutylene terephthalate, polyethylene terephthalate; thermoplastic polyurethane elastomer; polyphenylene sulfide; polyether sulfone; polyphenylene oxide; vinyl polymers, preferably polystyrene; polyvinyl chloride; polyacrylate; polyurethanes; polyetherimide; polyetheretherketone; polyetherketone; polymethylpentene; perfluoroalkoxy; ethylene tetrafluroethylene; polyvinylidene fluoride; fluorinated ethylene propylene; liquid crystal polymers; polyphthalamide; polyether, polysiloxane, thermoplastic polyimide; and polyamide.

9. The method according to any of the preceding claims, wherein the mixing step comprises mixing the surface functionalized nano filler material suspension into the polymer solution and stirring for 2 - 6 hours.

10. The method according to any of the preceding claims, further comprising the step of compounding the polymer nanocomposite masterbatch with a polymer to form a polymer nanocomposite.

11. A polymer nanocomposite masterbatch obtainable by the method according to any of the preceding claims wherein the nano filler material is organo clay modified with quaternary ammonium salt.

12. The polymer nanocomposite masterbatch according to claim 11 comprising nano filler material in an amount in the range from 10 to 80 % by weight with respect to the total weight of the polymer nanocomposite masterbatch.

13. A method for preparing a polymer nanocomposite comprising a step of compounding the polymer nanocomposite masterbatch according to claim 11 or 12 or obtainable by the method according to any of the claims 1 to 10 with a polymer.

14. A polymer nanocomposite obtainable by the method according to claim 13.

**Patentansprüche**

1. Verfahren zum Herstellen eines Polymer-Nanoverbundstoff-Masterbatches, umfassend die Schritte:

a) Dispergieren eines Nanofüllstoffmaterials mit einer geometrischen Größe der Primärpartikel von 0,01 bis 100 nm in Bezug auf zumindest eine Dimension davon in einem organischen Lösungsmittel;
b) In-Kontakt-Bringen des Nanofüllstoffmaterials in dem organischen Lösungsmittel mit einem Oberflächenfunktionalisierungsmittel, um eine oberflächenfunktionalisierte Nanofüllstoffmaterialsuspension zu bilden, wobei das Oberflächenfunktionalisierungsmittel ausgewählt ist aus der Gruppe, bestehend aus quaternären Ammoniumsalzen, Silanen, Titanaten, organischer Säure, gepfropftem Oligomer oder gepfropftem Polymer;
c) Mischen der oberflächenfunktionalisierten Nanofüllstoffmaterialsuspension mit einer Polymerlösung, um eine gelöste Polymer-Nanoverbundstoff-Masterbatch-Suspension zu bilden;
d) Ausfällen der gelösten Polymer-Nanoverbundstoff-Masterbatch-Suspension, um eine Ausfällung eines Polymer-Nanoverbundstoff-Masterbatches zu erzeugen;

e) Optional Filtrieren und Trocknen der Ausfällung des Polymer-Nanoverbundstoff-Masterbatches, um ein Polymer-Nanoverbundstoff-Masterbatch zu bilden.

2. Verfahren nach Anspruch 1, wobei das Nanofüllstoffmaterial ausgewählt ist aus der Gruppe, bestehend aus Mineralien, anorganischen Füllstoffen, organischen Füllstoffen, Metalloxiden, natürlichen Fasern, synthetischen Fasern oder einem Gemisch davon.

3. Verfahren nach Anspruch 1 oder 2, wobei das Nanofüllstoffmaterial ausgewählt ist aus Montmorillonit, Smectit, Kaolin, Boulangerit, Imogolit, beschichteter Silikatverbindung, Organoton, modifiziert mit quaternärem Ammoniumsalz, Siliziumdioxid, Ruß, Zellulosefaser, Nanozellulosefaser, Kalk, Kalziumcarbonat, Aluminiumoxid oder einem Gemisch davon.

4. Verfahren nach einem der vorangehenden Ansprüche, wobei das organische Lösungsmittel ausgewählt ist aus Xylol, Toluol, Hexan oder Dichlorbenzol.

5. Verfahren nach einem der vorangehenden Ansprüche, wobei der Schritt des Dispergierens das Rühren des Nanofülstoffmaterials in dem organischen Lösungsmittel für 3 Stunden - 24 Stunden und/oder Sonifizieren für 20-60 Minuten und/oder Homogenisieren für 15-30 Minuten und/oder Rühren für 12-24 Stunden umfasst.

6. Verfahren nach einem der vorangehenden Ansprüche, wobei der Schritt des In-Kontakt-Bringens der homogenisierenden Nanofüllstoffmaterialsuspension für 15-30 Minuten und/oder Hinzufügen des Oberflächenfunktionalisierungsmittels und/oder Rühren für 2-6 Stunden bei 80-100°C und/oder Homogenisieren des resultierenden Gemisch für 15-30 Minuten und/oder Rühren für 12-24 Stunden umfasst.

7. Verfahren nach einem der vorangehenden Ansprüche, wobei das Oberflächenfunktionalisierungsmittel in einer Menge in dem Bereich von 0,1 bis 20 Gew.-%, bezogen auf das Gewicht des Nanofüllstoffmaterials, ist.

8. Verfahren nach einem der vorangehenden Ansprüche, wobei die Polymerlösung eine Lösung eines Polymers ist, ausgewählt aus Polyolefinen, vorzugsweise Polyethylen, Polypropylen, C6-C8-Alphapolyolefine basiertem Copolymer davon; Polyolefinkautschuk; Polyolefinoligomer; Polyolefinwachs; Polyaramid, Polyarylamid; Polycarbonat; Styrolacrylonitril; Acrylonitrilbutadienstyrol; Polyacetal; Polysulfon; Polyester, vorzugsweise Polybutylenterephthalat, Polyethylenterephthalat; thermoplastisches Polyurethanelastomer; Polyphenylensulfid; Polyethersulfon; Polyphenylenoxid; Vinylpolymere; vorzugsweise Polystyrol; Polyvinylchlorid; Polyacrylat; Polyurethane; Polyetherimid; Polyetheretherketon; Polyetherketon; Polymethylpenten; Perfluoralkoxy; Ethylentetrafluorethylen; Polyvinylidenfluorid; fluoriniertes Ethylenpropylen; flüssige Kristallpolymere; Polyphthalamid; Polyether, Polysiloxan, thermoplastisches Polyimid; und Polyamid.

9. Verfahren nach einem der vorangehenden Ansprüche, wobei der Schritt des Mischens das Mischen der oberflächenfunktionalisierten Nanofüllstoffmaterialsuspension in der Polymerlösung und Rühren für 2-6 Stunden umfasst.

10. Verfahren nach einem der vorangehenden Ansprüche, ferner umfassend den Schritt des Vermischens des Polymer-Nanoverbundstoff-Masterbatches mit einem Polymer, um einem Polymer-Nanoverbundstoff zu bilden.

11. Polymer-Nanoverbundstoff-Masterbatch erhältlich durch das Verfahren nach einem der vorangehenden Ansprüche, wobei das Nanofüllmaterial Organoton ist, der mit quaternärem Ammoniumsalz modifiziert ist.

12. Polymer-Nanoverbundstoff-Masterbatch nach Anspruch 11, umfassend ein Nanofüllstoffmaterial in einer Menge in dem Bereich von 10 bis 80 Gew.-%, bezogen auf das Gesamtgewicht des Polymer-Nanoverbundstoff-Masterbatches.

13. Verfahren zum Herstellen eines Polymernanoverbundstoffes, umfassend einen Schritt des Verarbeitens des Polymer-Nanoverbundstoff-Masterbatches nach Anspruch 11 oder 12 oder erhältlich durch das Verfahren nach einem der Ansprüche 1 bis 10, mit einem Polymer.

14. Polymer-Nanoverbundstoff erhältlich durch das Verfahren nach Anspruch 13.

## Revendications

1. Procédé de préparation d'un lot maître de nanocomposite polymère, comprenant les étapes consistant à :

   a) disperser un nanomatériau de charge ayant une taille géométrique de particule primaire comprise entre 0,01 et 100 nm par rapport à au moins une de ses dimensions dans un solvant organique ;
   b) mettre en contact le nanomatériau de charge dans le solvant organique avec un agent de fonctionnalisation de surface pour former une suspension de nanomatériau de charge fonctionnalisée en surface, dans lequel l'agent de fonctionnalisation de surface est sélectionné dans le groupe constitué de sels d'ammonium quaternaire, silanes, titanates, acide organique, oligomère greffé ou polymère greffé ;
   c) mélanger la suspension de nanomatériau de charge fonctionnalisée en surface avec une solution polymère pour former une suspension de lot maître de nanocomposite polymère dissous ;
   d) précipiter la suspension de lot maître de nanocomposite polymère dissous pour produire une précipitation de lot maître de nanocomposite polymère ;
   e) en option, filtrer et sécher la précipitation de lot maître de nanocomposite polymère pour former un lot maître de nanocomposite polymère.

2. Procédé selon la revendication 1, dans lequel le nanomatériau de charge est sélectionné dans le groupe constitué de minéraux, charges inorganiques, charges organiques, oxydes métalliques, fibres naturelles, fibres synthétiques ou un mélange de ces derniers.

3. Procédé selon la revendication 1 ou 2, dans lequel le nanomatériau de charge est sélectionné parmi : montmorillonite, smectite, kaolin, boulangérite, imogolite, composé silicate feuilleté, argile organique modifiée par un sel d'ammonium quaternaire, silice, noir de carbone, fibre de cellulose, nanofibre de cellulose, talc, carbonate de calcium, alumine ou un mélange de ces derniers.

4. Procédé selon l'une quelconque des revendications précédentes, dans lequel le solvant organique est sélectionné parmi : xylène, toluène, hexane ou dichlorobenzène,

5. Procédé selon l'une quelconque des revendications précédentes, dans lequel l'étape de dispersion consiste à agiter le nanomatériau de charge dans le solvant organique pendant 3 heures à 24 heures et/ou soniquer pendant 20 à 60 minutes et/ou homogénéiser pendant 15 à 30 minutes et/ou agiter pendant 12 à 24 heures.

6. Procédé selon l'une quelconque des revendications précédentes, dans lequel l'étape de mise en contact consiste à homogénéiser la suspension de nanomatériau de charge pendant 15 à 30 minutes et/ou ajouter l'agent de fonctionnalisation de surface et/ou agiter pendant 2 à 6 heures entre 80 et 100°C et/ou homogénéiser le mélange résultant pendant 15 à 30 minutes et/ou agiter pendant 12 à 24 heures,

7. Procédé selon l'une quelconque des revendications précédentes, dans lequel l'agent de fonctionnalisation de surface est dans une quantité comprise entre 0,1 et 20 % en poids par rapport au poids du nanomatériau de charge.

8. Procédé selon l'une quelconque des revendications précédentes, dans lequel la solution polymère est une solution d'un polymère sélectionné parmi des polyoléfines, de préférence polyéthylène, polypropylène, alpha-polyoléfines en C4-C8, leur copolymère ; caoutchouc de polyoléfine ; oligomère de polyoléfine ; cire de polyoléfine ; polyaramide ; polyarylamide ; polycarbonate ; styrène acrylonitrile ; acrylonitrile butadiène styrène ; polyacétal ; polysulfone ; polyester, de préférence téréphtalate de polybutylène, téréphtalate de polyéthylène ; élastomère de polyuréthanne thermoplastique ; sulfure de polyphénylène ; sulfone de polyéther ; oxyde de polyphénylène ; polymères vinyliques, de préférence polystyrène ; chlorure de polyvinyle ; polyacrylate ; polyuréthanes ; polyétherimide ; polyétheréthercétone ; polyéthercétone ; polyméthylpentène ; perfluoroalkoxy ; éthylène tétrafluoroéthylène ; fluorure de polyvinylidène ; éthylène propylène fluoré ; polymères à cristaux liquides ; polyphtalamide ; polyéther, polysiloxane, polyimide thermoplastique ; et polyamide.

9. Procédé selon l'une quelconque des revendications précédentes, dans lequel l'étape de mélangeage consiste à mélanger la suspension de nanomatériau de charge fonctionnalisée en surface dans la solution polymère et à agiter pendant 2 à 6 heures.

10. Procédé selon l'une quelconque des revendications précédentes, comprenant en outre l'étape de compoundage du lot maître de nanocomposite polymère avec un polymère pour former un nanocomposite polymère.

**11.** Lot maître de nanocomposite polymère pouvant être obtenu par le procédé selon l'une quelconque des revendications précédentes dans lequel le nanomatériau de charge est une argile organique modifiée par un sel d'ammonium quaternaire.

**12.** Lot maître de nanocomposite polymère selon la revendication 11, comprenant un nanomatériau de charge dans une quantité comprise entre 10 et 80 % en poids par rapport au total poids du lot maître de nanocomposite polymère.

**13.** Procédé de préparation d'un nanocomposite polymère comprenant une étape de compoundage du lot maître de nanocomposite polymère selon la revendication 11 ou 12 ou pouvant être obtenu par le procédé selon l'une quelconque des revendications 1 à 10 avec un polymère.

**14.** Nanocomposite polymère pouvant être obtenu par le procédé selon la revendication 13.

Fig. 1

Fig. 2

Fig. 3

Fig. 4

Evaporation method                    Precipitation method

Fig. 5

Evaporation                              Precipitation

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060267255 A1
- US 7514491 B2
- US 6462122 B1
- US 8124678 B2
- WO 2008112362 A2
- US 2011086956 A1
- US 2009176911 A1
- WO 2006075971 A1